# EUROPEAN PATENT SPECIFICATION

(11) **EP 2 663 955 B1**
(45) Date of publication and mention of the grant of the patent: **26.10.2022**
(21) Application number: 12734731.8
(22) Date of filing: 13.01.2012
(51) Int. Cl.: G06Q 30/02, G06Q 10/06, H04L 12/28

(54) **A METHOD AND SYSTEM FOR EFFECTIVE MANAGEMENT OF ENERGY CONSUMPTION BY HOUSEHOLD APPLIANCES**
VERFAHREN UND SYSTEM ZUR EFFEKTIVEN VERWALTUNG DES ENERGIEVERBRAUCHS VON HAUSHALTSVORRICHTUNGEN
PROCÉDÉ ET SYSTÈME POUR LA GESTION EFFICACE DE LA CONSOMMATION D'ÉNERGIE D'APPAREILS ÉLECTROMÉNAGERS

(30) Priority: 13.01.2011 IN 118MU2011
(43) Date of publication of application: 20.11.2013
(73) Proprietor: Tata Consultancy Services Ltd., Mumbai 400 021, Maharashtra (IN)
(72) Inventor: PAL, Arpan, Sector -V Kolkata 700091 West Bengal (IN); KOLAY, Subrata, Sector -V Kolkata 700091 West Bengal (IN); BHAUMIK, Chirabrata, Sector -V Kolkata 700091 West Bengal (IN); SHUKLA, Jasma, Sector -V Kolkata 700091 West Bengal (IN)
(74) Representative: Potter Clarkson
(86) International application number: PCT/IN2012/000036
(87) International publication number: WO 2012/095870

(56) References cited:
- GB-A- 2 399 707
- US-A1- 2005 240 427
- US-A1- 2008 255 782
- US-A1- 2008 272 934
- US-A1- 2010 250 440
- US-A1- 2010 250 440
- US-A1- 2010 286 937
- US-A2- 2003 023 540
- US-B1- 6 618 709
- US-B1- 6 868 293
- US-B1- 6 868 293
- US-B2- 7 793 317

## Description

### FIELD OF THE INVENTION

The present invention relates to effective management of energy consumption. Particularly the invention provides a method and system for effective management of energy consumption by household appliances using a home energy information gateway.

### BACKGROUND OF THE INVENTION

With the advent of the internet of things, real-time communications will be possible not only by humans but also by things at anytime and from anywhere. It would create a plethora of innovative applications and services, which, in turn would enhance the quality of life and reduce inequalities whilst providing new revenue opportunities for a host of enterprising businesses. In order to connect everyday objects and devices to large databases and networks, and indeed to the network of networks (the internet), a simple, unobtrusive and cost-effective system of item identification is crucial only then can data about things be collected and processed.

Rising energy costs and more frequent disruptions in electric service have caused consumers to focus more attention on their energy usage and bills. A user is in better situation to control energy more effectively when they have more information on 'where when what' amount of energy is consumed. More the detailed information is available more the control on energy consumption is possible. From energy provider's point of view also the information is useful, for example, with detailed data collected through the home energy information gateway, an energy provider will be able to predict more accurately when supply and demand imbalances may occur. The provider could then use the energy gateway to remotely adjust the customer's thermostat, if so equipped, within agreed-upon parameters, to achieve necessary load reduction targets.

Although, information about the energy consumption for home is made available to the user in various forms and by various methods, still there are certain disadvantages associated with the existing energy information gateway. A dedicated display device is always required to view and control the energy information, such as personal computer. The computer is having Java, graphical user interface (GUI) - operating system (OS) and the latest Internet technologies. User needs to open an account which will be configured in the smart meter, which monitors the energy consumption. The smart meter transmits energy consumption data to the remote server at periodic intervals and the user needs to login into his/her account using a personal computer based browser. The user has to log in to their personal computers in order to keep track of the energy consumption patterns and has to generate and visualize weekly, monthly or yearly energy consumption data on the display device. Most of the existing solutions tend to use personal computer or other high-cost devices for processing and viewing energy data. Which is not convenient for non-tech savvy people and it also consumes high energy if kept on all the time. Hence if the display device itself consumes high power, it self-defeats the purpose of energy conservation. A dedicated display device would not be preferable from economic and energy consumption point of view.

In the existing solution, some of the major drawbacks which are being faced: some of them utilizes separate touch panel based display medium for monitoring and controlling of the household appliances, which increase the overall cost, lack of 24X7 monitoring and controlling of household appliances using television, control solution that require human intervention, non consideration of local whether or environmental conditions affecting household appliances, scheduling overall consumption by setting up budget for the month and the basic level data analytics of the energy consumption. In addition, if the users are enabled to view current tariff, current consumption and costing for each of the high consumed appliances on real time then user can more effectively control each of the appliances either by shifting the load or turning off the load when it is not necessary and thereby reduce the total energy consumption inside home and reduce the overall peak energy demand.

To achieve the effective management of energy consumption by household appliances, there is a need to device a solution which can act as a home energy information gateway. There is also need for a solution which can utilize the existing display device and home area network for eliminating the need of a dedicated display device. Some of the existing method and systems known to us are as follows: GB2399707A discloses a remote monitoring system provided for remote monitoring of a remote appliance, such as a utility meter In addition to the appliance, the remote monitoring system comprises a control unit in communication with the remote appliance via a local area wireless link and a monitoring unit in communication with the control unit via a telecommunications link The remote appliance transmits monitoring information to the control unit via the local area wireless link. The monitoring information is required by the monitoring unit for the purpose of monitoring the remote appliance, for example the information may be a meter reading in the case of a utility meter The control unit transmits such received monitoring information to the monitoring unit via the telecommunications link. The control unit may be a digital television, set top box, personal computer, mobile phone or cell phone The local area wireless link may be Bluetooth (RTM), IEEE 802.11 standard or Wi-Fi (RTM) The telecommunications link may be a telephone line or a mobile telecommunications wireless link.

US2010321574A to Kerofsky provides a method and systems for controlling power consumption with a power controlling display device. Kerofsky teaches the about a power controlling display device that receives power cost data and user preferences and generates a power consumption schedule that may control internal display components as well as connected power consuming devices.

US2010127889A to Vogel et al. provides a method and system of virtual energy management display. Vogel, et al. specifically teaches about the periodically receiving via a mesh local area network electronic data representing energy management-related information by a RF communication-enabled memory storage device coupled to an electronic display device within a home area network.

EP2157408A to Egmond et al. provides a low-cost display device. Egmond et al. Yedida, et al. specifically teaches about rendering actual information on the energy consumption at home, enabling the consumer to set a target to save energy consumption, and to see the outcome whether the target is fulfilled or not.

Beecher Tuttle in "Smart home I Toyota to Roll Out home Energy Management System in 2012" discloses an effort to enable its customer base to better control its energy consumption, Toyota recently announced that it is developing a smart center system that links households, vehicles and electric power companies. The all-in-one energy management system will allow customers to use their television or mobile phone to monitor the amount of energy that is consumed by their home.

Jim Hammett in "Interactive home Energy Management" discloses about a pilot program, in which 50 homes will use Edison's existing fiber optic network in combination with local telephone and cable television facilities. AEMS provides an energy profile for each of appliances and compares energy use at any instant, or on a daily, weekly, or monthly basis. Home owners can compare different rates offered by Edison, and participants will receive a customized bill showing how each monitored appliance contributes to the total bill.

Kushiro, N. et al. in "Integrated residential gateway controller for home energy management system" discloses a low cost and highly reliable residential gateway controller (residential G/W) with plug & play mechanism has been developed for home energy management system (HEMS).

Inoue, M. et al. in "Network architecture for home energy management system" discloses network architecture for home energy management system (HEMS).

The above mentioned prior arts fail to disclose an efficient method and system for effective management of energy consumption by household appliances. Prior art also fails to disclose method and system that can utilize the existing display device and home area network for delivering energy usage information of household appliances into the hands of consumers.

Thus, in the light of the above mentioned background art, it is evident that, there is a need for a solution that can effectively manage energy consumption by household appliances and eliminating the need for a separate display device and home area network for delivering energy usage information of household appliances.

### OBJECTIVES OF THE INVENTION

In accordance with the present invention, the primary objective is to provide a method and system for effective management of energy consumption by household appliances using a home energy information gateway.

Another objective of the invention is to provide a method and system for an efficient and economic home energy information gateway which can provide the energy consumption information and communication interface through a set top box like gateway device on the existing display device such as television thereby reducing extra display medium cost.

Another objective of the invention is to provide a method and system for generating daily, weekly, peek hour, customized energy consumption detailed statistical reports and graphs including the energy consumption price at that time based on the current tariff using an energy viewer application on the said television to control and effectively manage energy consumption.

Another objective of the invention is to enable an energy provider to predict supply and demand imbalances and accordingly plan for tuning the energy grid using detailed data being collected through the said home energy information gateway.

Still another objective of the invention is to provide a method and system for fetching local weather condition from weather website, intelligent rule engine setting some of the appliance in such weather condition so that it consumes less energy.

### SUMMARY OF THE INVENTION

The present invention is defined by the appended independent claims and provides effective management of energy consumption by household appliances using a household energy information gateway.

We further disclose a method and system is provided for an economic and efficient energy information gateway which can provide the energy consumption information using smart meter and communication interface through a set top box like gateway device on the existing display device such as television connected over a home area network.

We further disclose that the method is provided for identifying energy consumption of household appliance at pre-defined interval and transmitting the identified energy consumption information to a set top box using an advanced energy smart meter; receiving the transmitted energy consumption information via a serial communications protocol, (Modbus 485), Zigbee or M-bus and communicating the received energy consumption information to a remote server for further billing of the said energy consumption at pre-scheduled intervals by the said set top box; validating the received, communicated and billed energy consumption information by the set top box; and analyzing the validated energy consumption information for further display on a television and optimizing the energy consumption using displayed energy consumption information of the said household appliance for effective management of energy consumption.

We further disclose that the method and system is provided for generating daily, weekly, peek hour, customized energy consumption detailed statistical reports and graphs including the energy consumption price at that time based on the current tariff using an energy viewer application on the said television to control and effectively manage energy consumption. The invention also offers a varied range of benefits to the consumers and energy utility as well as non-utility providers.

The above said method and system are preferably effective management of energy consumption by household appliances using home energy information gateway but also can be used for many other applications.

### BRIEF DESCRIPTION OF THE DRAWINGS

The foregoing summary, as well as the following detailed description of preferred embodiments, are better understood when read in conjunction with the appended drawings. For the purpose of illustrating the invention, there is shown in the drawings exemplary constructions of the invention; however, the invention is not limited to the specific methods and system disclosed. In the drawings:
**Figure 1****:** shows a flow diagram of home energy information gateway
**Figure 2****:** shows block diagram of home energy information gateway
**Figure 3****:** representing daily energy consumption chart
**Figure 4****:** representing energy consumption web interface home page
**Figure 5****:** representing web interface showing appliance monitoring and control
**Figure 6****:** representing web interface showing weekly consumption chart
**Figure 7****:** shows a call flow diagram of home energy information gateway

### DETAILED DESCRIPTION OF THE INVENTION

Some embodiments of this invention, illustrating all its features, will now be discussed in detail.

The present invention enables a method and system for effective management of energy consumption by monitoring, controlling and displaying energy usage inside home by way of collecting smart meter data and generating user friendly reports and graphs. More particularly the invention provides method and system for displaying the smart meter data and communication interface through a set top box like gateway on the existing display devices such as television in terms of widgets.

The present application provides a method for effective management of energy consumption by a plurality of appliances, by employing a home energy information gateway over a dedicated local area network communicatively coupled with said plurality of appliance, the said method comprising computer implemented steps defined in claim 1.

The present application provides a system for effective management of energy consumption by a plurality of appliances, by employing a home energy information gateway over a dedicated home area network communicatively coupled with said plurality of appliance, wherein the system is defined in claim 6.

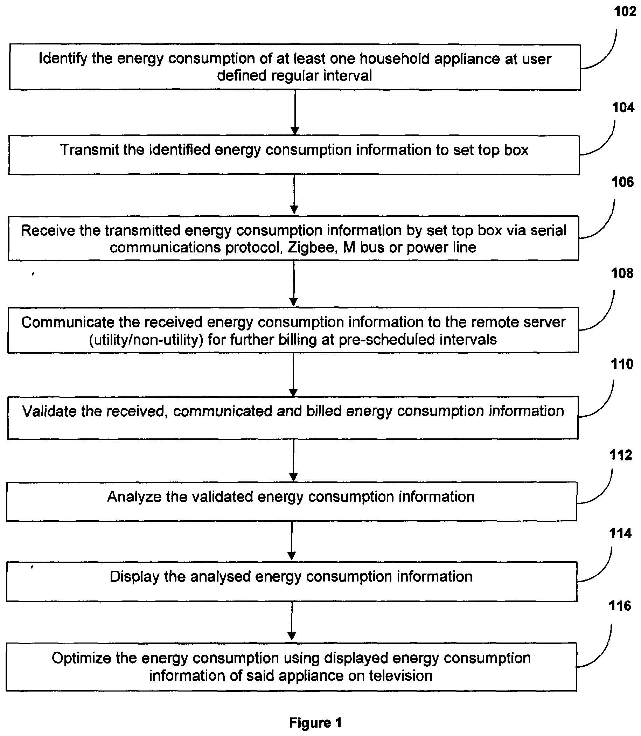

Referring to **Figure 1** is a flow diagram of home energy information gateway. The process starts at the step **102,** the energy consumption of at least one household appliance at user defined regular interval is identified. At the step **104,** the identified energy consumption information is transmitted to set top box. At the step **106,** the transmitted energy consumption information is received by set top box via serial communications protocol, Zigbee, M bus or power line. At the step **108,** the received energy consumption information is communicated to the remote server for further billing at pre-scheduled intervals. At the step **110,** the received, communicated and billed energy consumption information is validated. At the step **112,** the validated energy consumption information is analysed. At the step **114,** the analysed energy consumption information is displayed. The process ends at the step **116,** the energy consumption is optimized using displayed energy consumption information of at least household appliance through a set top box device on the television.

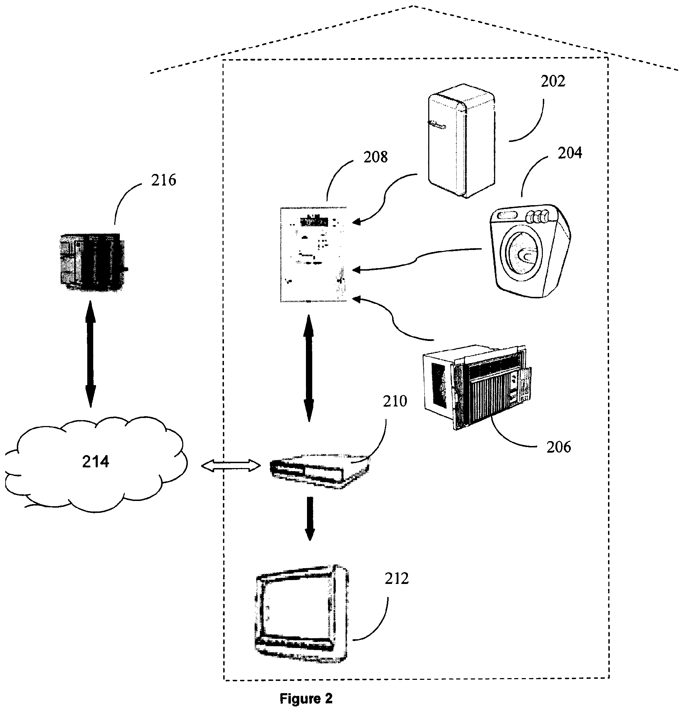

Referring to **Figure 2** is a block diagram of home energy information gateway. The home energy information gateway comprises a home area network (HAN) enabled refrigerator **(202),** a home area network (HAN) enabled washing machine **(204),** a home area network (HAN) enabled air conditioner **(206)** a home area network (HAN) enabled smart meter **(208),** a home area network (HAN) set top box (STB) **(210),** a television **(212)** and a utility/ non-utility web portal **(216)** hosted by the utility / non-utility server connected through internet **(214).**

According to the invention the energy consumption of household appliances is identified at regular interval using a smart meter **(208)** which is connected with household appliances. A smart meter **(208)** is an advanced energy meter that identifies consumption of individual households such as but not restricted to refrigerator **(202),** washing machine **(204),** air conditioner **(206),** television or microwave continuously at regular intervals than a conventional meter.

According to the invention the smart meter **(208)** transmits the identified energy consumption information of the household appliance to set top box (STB) **(210).** The set top box (STB) **(210)** is used as the gateway among utility/ non-utility provider through a web portal **(216)** hosted by the utility / non-utility server, the smart energy meter **(208)** and household appliances. The set top box (STB) **(210)** is utilized as multiple connectivity options on the home area network (HAN) side. Further the set top box (STB) **(210)** receives the transmitted energy consumption information via a serial communications protocol. The serial communications protocol is selected from the group of RS485 mod-bus protocol, ZigBee and Power-line. The set top box (STB) **(210)** also comprises multiple universal serial bus (USB) ports and various connectivity options enabled in it using suitable universal serial bus (USB) dongles. It should be noted that, USB to Serial dongles is used for interfacing with Modbus 485 based smart meters **(208).** USB based Zigbee coordinator connected to the gateway which establishes the Zigbee PAN Network. Zigbee based Smart Meter **(208)** and Zigbee based smart appliances are connected to the Zigbee PAN network to form a mesh topology. In case of non-Zigbee based appliances, one Zigbee based plug can be placed in between said household appliances and power connection in this way non Zigbee based appliances can be connected to the gateway home area network in a retrofit system.

According to the invention the set top box (STB) **(210)** communicates the received energy consumption information to the utility web portal **(216)** hosted or managed by the utility provider or non utility provider server connected through internet **(214)** for further billing at pre-scheduled intervals. The data can then be made available to the energy provider where servers are managed and hosted by utility provider. In case of non-utility service provider data are available to the non-utility provider. The energy consumption information is communicated to utility web portal **(216)** using automatic meter reading (AMR) techniques for monitoring and billing purposes. AMR technologies include mobile and network technologies based on telephony platforms (wired and wireless), radio frequency (RF), or power line transmission. So, in addition to providing readings, the meter can also receive (and act on) instructions sent from the utility.

According to the invention the set top box (STB) **(210)** validates the received, communicated and billed energy consumption information. Further it analyzes the validated energy consumption information. The end user can view the energy consumption on television **(212)** through low power and cost effective set top box (STB) **(210).**

We disclose the user having the liberty to optimize the energy consumption by monitoring energy consumption of said appliances, regulating energy consumption of the said appliances by budgeting for the said appliances, wherein the said appliances are budgeted on monthly basis or energy tariff, scheduling the said appliances in the lower tariff zone of energy and overriding curtailment initiatives using a web user interface for optimizing the said energy consumption. In an embodiment of the invention, the user has the liberty to optimize the energy consumption using displayed energy consumption information of household appliances on television **(212)** through low power and cost effective set top box (STB) **(210).** The energy consumption data collected through the set top box (STB) **(210)** also enables an energy provider/ non-utility service provider to engage its customers in new ways. Energy / non-utility service providers and consumers can also work together to cut energy consumption through incentives such as time-of-use rates or load reduction rates. The home energy information gateway also provides advanced data analytics using home energy information gateway analytics rule engine running on the home energy information gateway and further displaying the same on the television **(212).** The advanced data analytics not only enhances the end-user experience but also facilitate utility provider to configure energy consumption tariff and send it to the set top box (STB) **(210)** via Internet. The said home energy information gateway analytics rule engine analyses energy consumption data for each of the said appliances as well as energy overall consumption data. It may also be utilized to provide latest news and update on energy usage to end-user as a ticker messages and or as RSS feed or server sent events.

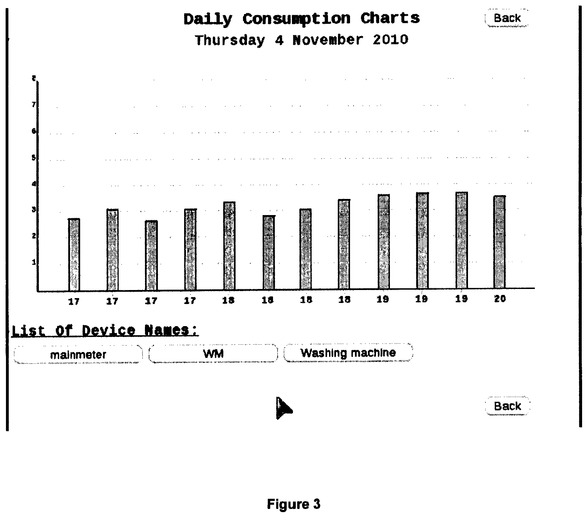

Referring to **Figure 3** is actual screenshot of the live data obtained from the smart meter **(208).** Wherein the user can obtain the weekly, daily as well as peek hour basis consumption of the energy. A user can generate daily consumption statistics and weekly consumption statistics. A detailed statistical analysis of the energy consumption day is possible, which when used in conjunction with dynamic tariff data, can intelligently suggest to the user the best possible power saving options and can declare incentive such time-of-use rates or load reduction rates which will be displayed on the television **(212)** screen. The current platform has an on-board digital signal processor (DSP) to support this kind of analytics computational load.

In an embodiment of the invention, the energy viewer application on television **(212)** is triggered by choosing the appropriate menu widget. The user can click on the "Daily Consumption" icon to get the energy consumption details throughout the day (Screen-shot shown in **Figure 3****).** Accordingly user can switch ON/OFF certain appliances to keep control on energy consumption. It also helps user to find if any appliances are running on sleep mode and consuming energy. A user can click on the "Weekly Consumption" icon to get the energy consumption details throughout the week user can get a statistical view which day of the week highest energy is consumed. The user can also view the energy consumption price at any time based on the current tariff. As shown in these figures, consumers can read the data and accordingly take action to reduce the energy consumption. Energy providers and consumer can also work together to cut energy consumption through incentive such as time-of-use rates or load reduction rates. Detailed data being collected through the home energy information gateway, an energy provider will able to predict more accurately when supply and demand imbalances may occur and accordingly plan for tuning the energy grid.

In an embodiment of the invention the home energy information gateway can talk to other smart appliances at home over the home area network (HAN). The users will be able to control the appliances from their television **(212).**

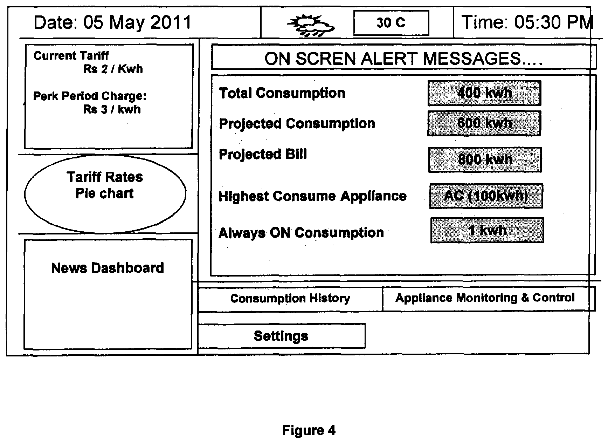

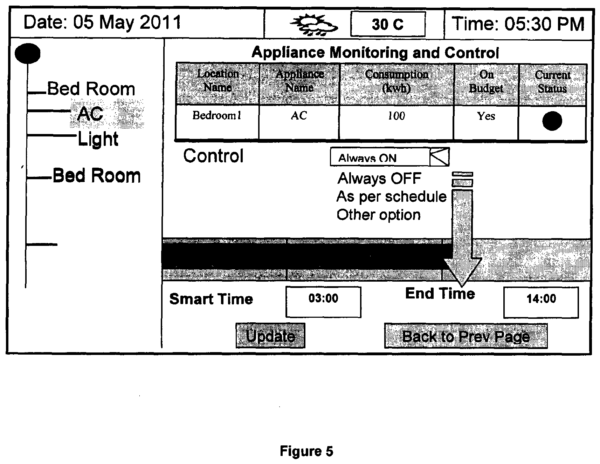

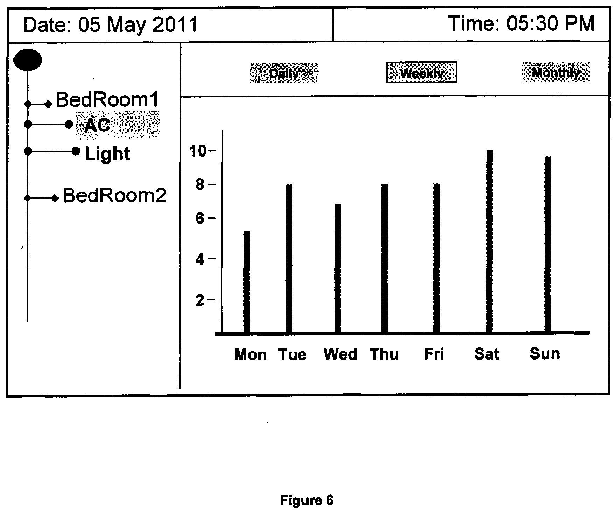

Referring to **Figure 4****,** **5****,** **6** are actual screenshot of the energy consumption web interface home page, web interface showing appliance monitoring and control and weekly consumption chart of the energy consumption of the said household appliances.

According to the invention the user is enabled to read the energy consumption data obtained using the smart meter **(208)** and accordingly take necessary action to reduce the energy consumption. Energy providers and user can also work together to cut energy consumption through incentive such as time-of-use rates or load reduction rates. The tariff for energy consumption is sent to the home energy information gateway from the utility server. The current invention also envisages a scheme on energy consumption data analytics. A lot of statistical analysis is done on the collected energy consumption data, which when used in conjunction with dynamic tariff data, can intelligently suggest to the user the best possible power saving options and can declare incentive such time-of-use rates or load reduction rates for further display on the television **(212).**

Referring to **Figure** 3 to **Figure 6** are the screenshots of the wire diagram design for monitoring and controlling of the household appliances.

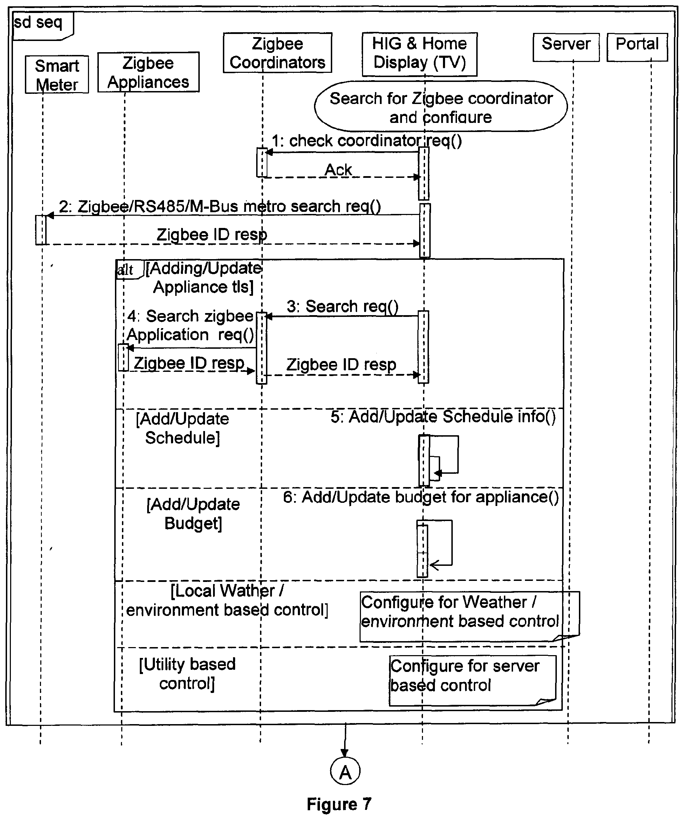

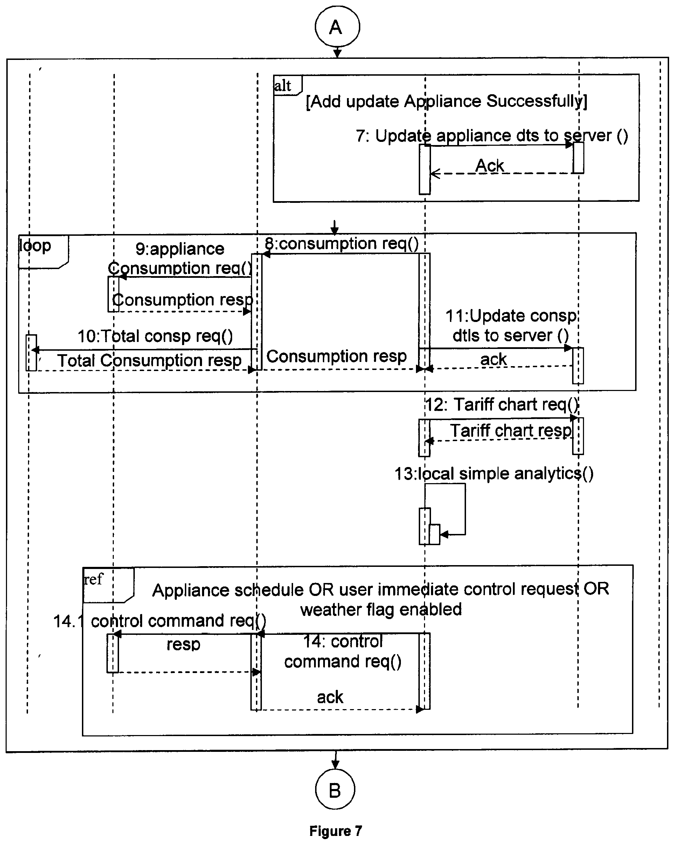

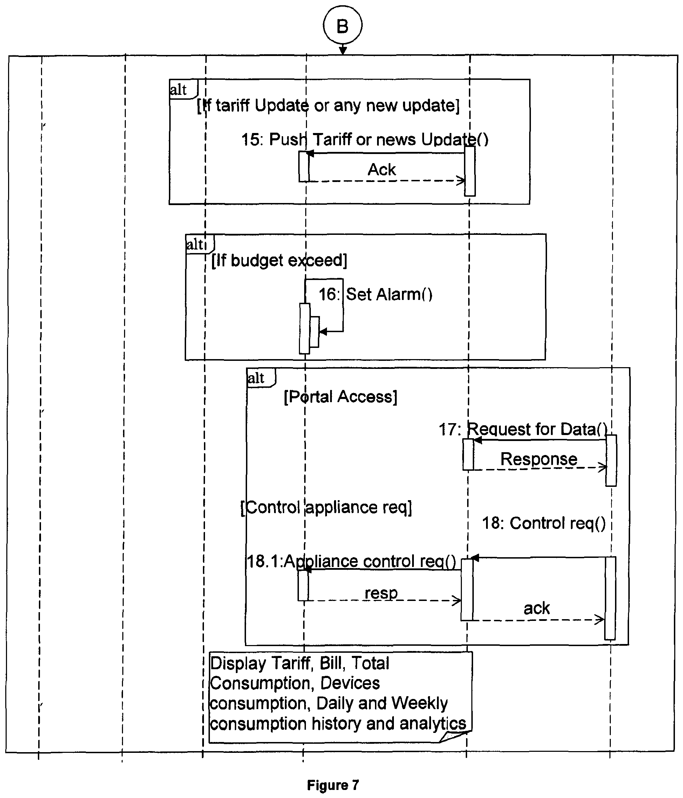

Referring to **Figure 7** is a call flow diagram of home energy information gateway.

In an embodiment of the invention the plurality of appliances communicates with the home energy information gateway using Zigbee communication protocol. In home display device, such as the television **(212)** is attached to the home energy information gateway. The advanced energy smart meter **(208)** is communicatively coupled with the home energy information gateway using Zigbee, M-Bus or Modbus protocol. The user has the liberty to monitor and control plurality of appliances from in home display such as television **(212).** First, the home energy information gateway start searching for a zigbee coordinator, upon finding the zigbee coordinator the home energy information gateway setup a zigbee network and channel and further conducts a basic coordinator test. The home energy information gateway then searches for the advanced energy smart meter **(208)** be it Zigbee / Modbus / M Bus based and get the advanced energy smart meter's **(208)** identification. The home energy information gateway then search for all the communicatively coupled appliances and return Zigbee identification to the user. Upon receiving the Zigbee identification, the user may accept the zigbee identification for the said appliance. The user is given liberty to schedule the said appliance by providing the scheduling information for the said appliances. The user may also set the budget for the said appliances. The user also has the liberty to control the said appliances based on local weather and utility in future from the in home display such as the television **(212).** Further, the home energy information gateway fetches current energy consumption for each of the registered appliances at periodic interval and updates the remote server if connected. The home energy information gateway also fetches current energy consumption tariff for the first time and for the subsequent events the remote server pushes the tariff if there are any changes. The home energy information gateway also act intelligently to control appliances if time or budget scheduling is set for an appliances. The home energy information gateway also sets an alarm if energy consumption budget exceeds or in case of other news update from the remote server. The home energy information gateway is adapted to receive analytical result of the energy consumption data analysed by the remote server utilizing an analytics rule engine which is supporting analytics of energy consumption data of the said plurality of appliances. The home energy information gateway then displays the billing details, tariff details, energy consumption history of said plurality of appliances and analytics result of the energy consumption data on in home display such as the television **(212).**

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein. The illustrations of arrangements described herein are intended to provide a general understanding of the structure of various embodiments, and they are not intended to serve as a complete description of all the elements and features of apparatus and systems that might make use of the structures described herein. Many other arrangements will be apparent to those of skill in the art upon reviewing the above description. Other arrangements may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense. The preceding description has been presented with reference to various embodiments. Persons skilled in the art and technology to which this application pertains will appreciate that alterations and changes in the described structures and methods of operation can be practiced within the scope of the appended claims.

### ADVANTAGES OF THE INVENTION

- The present invention provides more effective load management of energy; conservation and value added energy related services. The home energy information gateway delivers energy usage information into the hands of consumers and energy providers to help them control and manage energy consumption proactively.
- The present invention enables consumers to read the data and accordingly take action to reduce the energy consumption. Energy utility / non-utility providers and consumer are also facilitated to work together to cut energy consumption through incentive such as time-of-use rates or load reduction rates.
- The present invention provides with detailed data being collected through the gateway, enabling the energy provider to predict more accurately when supply and demand imbalances may occur and accordingly plan for tuning the energy grid.
- The present invention provides interfacing with the household appliances allowing the user to control appliances centrally from their television and reducing energy consumption.
- The present invention provides interfacing with local weather for helping user to minimize consumption proactively where user intervention is not required.
- The present invention provides interfacing with the remote server allowing the user to run complex analytics on the remote server and send back result to the Gateway for displaying on television thus reducing the consumption and burden of having low horse powered Gateway.
- The present invention enables the energy utility/non-utility provider to securely remote control customer devices to reduce supply and demand imbalance.

## Claims

1. A method of optimizing energy consumption of a plurality of appliances by employing a home energy information gateway over a dedicated local area network communicatively coupled with the plurality of appliances, the method comprising steps of:
identifying, by a smart meter (208), energy consumption information of at least one of the plurality of appliances at a pre-defined interval, wherein the energy consumption information is transmitted to a set top box (210), and wherein the set top box (210) is a gateway device for the home energy information gateway, wherein the set top box (210) is employed as the home energy information gateway among utility or non-utility providers through a web portal (216) hosted by a utility or non-utility server, the smart meter (208) and the plurality of appliances;
communicating, by the set top box (210), the energy consumption information to a remote server in order to bill the energy consumption information at a pre-scheduled interval, wherein the billed energy consumption information is received by the gateway device from the remote server;
validating, by the set top box (210), the billed energy consumption information;
analyzing, by the set top box (210), the validated billed energy consumption information, wherein the set top box provides advanced data analytics using a home energy information gateway analytics rule engine for analyzing the energy consumption information for each of the plurality of appliances and overall energy consumption data, and wherein the set top box (210) comprises an on-board dedicated digital signal processor for performing the advanced data analytics;
displaying the analyzed energy consumption information, on a screen of a television (212), wherein the television (212) is communicatively coupled to the set top box (210);
enabling controlling the energy consumption of the at least one of the plurality of appliances by:
a user from the television (212), or
fetching local weather condition from a weather website and automatically controlling the at least one of the plurality of appliances based on the local weather condition for minimizing the energy consumption of the at least one of the plurality of appliances; and
suggesting power saving options to the user by conjugating the energy consumption information with a dynamic energy tariff data, wherein the user is enabled to view energy consumption price at any time based on the dynamic energy tariff data.

2. The method of claim 1 further comprises receiving, by the gateway device, the energy consumption information via a serial communications protocol, wherein the serial communications protocol is selected from a group comprising RS485 mod-bus protocol, ZigBee, or Power-line.

3. The method of claim 1, wherein the energy consumption budget is set on daily basis, weekly basis, monthly basis, or on energy tariff basis.

4. The method of claim 1 further comprises providing latest news update on energy consumption to the user as a ticker messages, an RSS feed, or the remote server sent events using the television (212).

5. The method of claim 1 further comprises displaying one or more messages on the television (212) received from the remote server, wherein the messages are selected from a group comprising a news update, a tariff update related to the energy consumption, or an appliance budget exceeding message.

6. A system for optimizing energy consumption of a plurality of appliances by employing a home energy information gateway over a dedicated local area network communicatively coupled with the plurality of appliances, wherein the system comprising:
a smart meter (208) to identify energy consumption information of at least one of the plurality of appliances at a pre-defined interval, wherein the energy consumption information is transmitted to a set top box (210), and wherein the set top box (210) is a gateway device for the home energy information gateway, wherein the set top box (210) is employed as the home energy information gateway among utility or non-utility providers through a web portal (216) hosted by a utility or non-utility server, the smart meter (208) and the plurality of appliances;
the set top box (210) to
communicate the energy consumption information to a remote server in order to bill the energy consumption information at pre-scheduled intervals, wherein the billed energy consumption information is received by the gateway device from the remote server;
validate the billed energy consumption information;
analyze the billed energy consumption information, wherein the set top box provides advanced data analytics using a home energy information gateway analytics rule engine for analyzing the energy consumption information for each of the plurality of appliances and overall energy consumption data, and wherein the set top box (210) comprises an on-board dedicated digital signal processor to perform the advanced data analytics;
display the analyzed energy consumption information on a screen of a television (212), wherein the television (212) is communicatively coupled to the set top box (210);
enable controlling the energy consumption of the at least one of the plurality of appliances by:
a user from the television (212), or
fetching local weather condition from a weather website and automatically controlling the at least one of the plurality of appliances based on the local weather condition for minimizing the energy consumption of the at least one of the plurality of appliances; and
suggest power saving options to the user by conjugating the energy consumption information with a dynamic energy tariff data, wherein the user is enabled to view energy consumption price at any time based on the dynamic energy tariff data.

7. The system of claim 6, wherein the at least one of the plurality of appliances is selected from a group comprising of a refrigerator (202), a washing machine (204), an air conditioner (206), a television (212), and a microwave.

8. The system of claim 6, wherein the set top box (210) further comprises of multiple universal serial bus ports.

9. The method as claimed in claim 1, further enabling the user to optimize the energy consumption based on the analyzed energy consumption information and the dynamic energy tariff data.

10. The method as claimed in claim 1, further enabling an energy provider to predict supply and demand imbalances and accordingly plan for tuning an energy grid using data being collected through the home energy information gateway.

11. The method as claimed in claim 1, further enabling the user to view and manage home energy consumption by the plurality of appliances using an internet (214) by facilitating secure communication having data privacy with a non-utility service provider.

## Patentansprüche

1. Verfahren zum Optimieren eines Energieverbrauchs einer Vielzahl von Geräten mittels Nutzens eines Heimenergieinformations-Gateways über ein dediziertes lokales Netzwerk, das mit der Vielzahl von Geräten kommunikativ gekoppelt ist, das Verfahren folgende Schritte umfassend:
Identifizieren, mittels eines intelligenten Zählers (208), von Energieverbrauchsinformationen von mindestens einem der Vielzahl von Geräten in einem vordefinierten Intervall, wobei die Energieverbrauchsinformationen an eine Set-Top-Box (210) übertragen werden und wobei die Set-Top-Box (210) eine Gateway-Vorrichtung für das Heimenergieinformations-Gateway ist, wobei die Set-Top-Box (210) als das Heimenergieinformations-Gateway unter öffentlichen oder nicht öffentlichen Versorgungsbereitstellern durch ein Webportal (216) genutzt wird, das mittels eines öffentlichen oder nicht öffentlichen Versorgungs-Servers, des intelligenten Zählers (208) und der Vielzahl von Geräten gehostet wird;
Kommunizieren, mittels der Set-Top-Box (210), der Energieverbrauchsinformationen an einen entfernten Server, um die Energieverbrauchsinformationen in einem vorab geplanten Intervall in Rechnung zu stellen, wobei die in Rechnung gestellten Energieverbrauchsinformationen mittels der Gateway-Vorrichtung von dem entfernten Server empfangen werden;
Validieren, mittels der Set-Top-Box (210), der in Rechnung gestellten Energieverbrauchsinformationen;
Analysieren, mittels der Set-Top-Box (210), der validierten in Rechnung gestellten Energieverbrauchsinformationen, wobei die Set-Top-Box eine erweiterte Datenanalyse unter Verwendung einer Heimenergieinformations-Gateway-Analyseregelmaschine zum Analysieren der Energieverbrauchsinformationen für jede der Vielzahl von Geräten und Gesamtenergieverbrauchsdaten bereitstellt, und wobei die Set-Top-Box (210) einen integrierten dedizierten Digitalsignalprozessor zum Durchführen der erweiterten Datenanalyse umfasst;
Anzeigen der analysierten Energieverbrauchsinformationen auf einem Bildschirm eines Fernsehers (212), wobei der Fernseher (212) mit der Set-Top-Box (210) kommunikativ gekoppelt ist;
Ermöglichen eines Steuerns des Energieverbrauchs des mindestens einen der Vielzahl von Geräten mittels:
eines Benutzers von dem Fernseher (212), oder
Abrufen einer lokalen Wetterbedingung von einer Wetter-Webseite und automatisches Steuern des mindestens einen der Vielzahl von Geräten basierend auf der lokalen Wetterbedingung zum Minimieren des Energieverbrauchs des mindestens einen der Vielzahl von Geräten; und
Vorschlagen von Stromsparoptionen an den Benutzer mittels Konjugierens der Energieverbrauchsinformationen mit dynamischen Energietarifdaten, wobei es dem Benutzer ermöglicht wird, einen Energieverbrauchspreis zu beliebiger Zeit basierend auf den dynamischen Energietarifdaten zu prüfen.

2. Verfahren nach Anspruch 1, das ferner ein Empfangen, mittels der Gateway-Vorrichtung, der Energieverbrauchsinformationen über ein serielles Kommunikationsprotokoll umfasst, wobei das serielle Kommunikationsprotokoll aus einer Gruppe ausgewählt ist, umfassend RS485 Mod-Bus-Protokoll, ZigBee oder Power-line.

3. Verfahren nach Anspruch 1, wobei das Energieverbrauchsbudget auf Tagesbasis, Wochenbasis, Monatsbasis oder auf Energietarifbasis gesetzt wird.

4. Verfahren nach Anspruch 1, das ferner das Bereitstellen der neuesten Nachrichtenaktualisierung über den Energieverbrauch an den Benutzer als Ticker-Nachrichten, ein RSS-Feed oder gesendete Ereignisse des entfernten Servers unter Verwendung des Fernsehers (212) umfasst.

5. Verfahren nach Anspruch 1, das ferner ein Anzeigen einer oder mehrerer Nachrichten auf dem Fernseher (212), die von dem entfernten Server empfangen werden, umfasst, wobei die Nachrichten aus einer Gruppe ausgewählt werden, umfassend eine Nachrichtenaktualisierung, eine Tarifaktualisierung, die sich auf den Energieverbrauch bezieht oder eine Gerätebudgetüberschreitungsnachricht.

6. System zum Optimieren des Energieverbrauchs einer Vielzahl von Geräten mittels Nutzens eines Heimenergieinformations-Gateways über ein dediziertes lokales Netzwerk, das mit der Vielzahl von Geräten kommunikativ gekoppelt ist, das System umfassend:
einen intelligenten Zähler (208), um Energieverbrauchsinformationen von mindestens einem der Vielzahl von Geräten in einem vordefinierten Intervall zu identifizieren, wobei die Energieverbrauchsinformationen an eine Set-Top-Box (210) übertragen werden und wobei die Set-Top-Box (210) eine Gateway-Vorrichtung für das Heimenergieinformations-Gateway ist, wobei die Set-Top-Box (210) als das Heimenergieinformations-Gateway unter öffentlichen oder nicht öffentlichen Versorgungsbereitstellern durch ein Webportal (216) genutzt wird, das mittels eines öffentlichen oder nicht öffentlichen Versorgungs-Servers, des intelligenten Zählers (208) und der Vielzahl von Geräten gehostet wird;
die Set-Top-Box (210) für Folgendes:
Kommunizieren der Energieverbrauchsinformationen an einen entfernten Server, um die Energieverbrauchsinformationen in vorab geplanten Intervallen in Rechnung zu stellen, wobei die in Rechnung gestellten Energieverbrauchsinformationen mittels der Gateway-Vorrichtung von dem entfernten Server empfangen werden;
Validieren der in Rechnung gestellten Energieverbrauchsinformationen;
Analysieren der in Rechnung gestellten Energieverbrauchsinformationen, wobei die Set-Top-Box die erweiterte Datenanalyse unter Verwendung einer Heimenergieinformations-Gateway-Analyseregelmaschine zum Analysieren der Energieverbrauchsinformationen für jede der Vielzahl von Geräten und Gesamtenergieverbrauchsdaten bereitstellt, und wobei die Set-Top-Box (210) einen integrierten dedizierten Digitalsignalprozessor umfasst, um die erweiterte Datenanalyse durchzuführen;
Anzeigen der analysierten Energieverbrauchsinformationen auf einem Bildschirm eines Fernsehers (212), wobei der Fernseher (212) mit der Set-Top-Box (210) kommunikativ gekoppelt ist;
Ermöglichen des Steuerns des Energieverbrauchs des mindestens einen der Vielzahl von Geräten mittels Folgendem:
eines Benutzers von dem Fernseher (212), oder
Abrufen der lokalen Wetterbedingung von einer Wetter-Webseite und automatisches Steuern des mindestens einen der Vielzahl von Geräten basierend auf der lokalen Wetterbedingung zum Minimieren des Energieverbrauchs des mindestens einen der Vielzahl von Geräten; und
Vorschlagen von Stromsparoptionen an den Benutzer mittels Konjugierens der Energieverbrauchsinformationen mit dynamischen Energietarifdaten, wobei es dem Benutzer ermöglicht wird, den Energieverbrauchspreis zu beliebiger Zeit basierend auf den dynamischen Energietarifdaten zu prüfen.

7. System nach Anspruch 6, wobei das mindestens eine der Vielzahl von Geräten aus einer Gruppe ausgewählt ist, bestehend aus einem Kühlschrank (202), einer Waschmaschine (204), einer Klimaanlage (206), einem Fernseher (212) und einer Mikrowelle.

8. System nach Anspruch 6, wobei die Set-Top-Box (210) ferner vielfache universelle serielle Busanschlüsse umfasst.

9. Verfahren nach Anspruch 1, das es dem Benutzer ferner ermöglicht, den Energieverbrauch basierend auf den analysierten Energieverbrauchsinformationen und den dynamischen Energietarifdaten zu optimieren.

10. Verfahren nach Anspruch 1, das es einem Energiebereitsteller ferner ermöglicht, Ungleichgewichte bei Angebot und Nachfrage vorherzusagen und entsprechend ein Feinabstimmen eines Energieversorgungsnetzes unter Verwendung von Daten zu planen, die durch das Heimenergieinformations-Gateway gesammelt werden.

11. Verfahren nach Anspruch 1, das es dem Benutzer ferner ermöglicht, den Heimenergieverbrauch mittels der Vielzahl von Geräten zu prüfen und zu verwalten unter Verwendung eines Internets (214) mittels Unterstützens einer sicheren Kommunikation, die Datenschutz mit einem nicht öffentlichen Versorgungsservicebereitsteller aufweist.

## Revendications

1. Procédé d'optimisation de consommation d'énergie d'une pluralité d'appareils à l'aide d'une passerelle d'informations sur l'énergie domestique sur un réseau local dédié couplé en communication avec la pluralité d'appareils, le procédé comprenant les étapes consistant :
à identifier, par un compteur intelligent (208), des informations de consommation d'énergie d'au moins un appareil de la pluralité d'appareils à un intervalle prédéfini, dans lequel les informations de consommation d'énergie sont transmises à un boîtier décodeur (210), et dans lequel le boîtier décodeur (210) est un dispositif de passerelle pour la passerelle d'informations sur l'énergie domestique, dans lequel le boîtier décodeur (210) est utilisé comme passerelle d'informations sur l'énergie domestique parmi des fournisseurs de services publics ou de services autres que publics par le biais d'un portail Web (216) hébergé par un serveur de services publics ou de services autres que publics, le compteur intelligent (208) et la pluralité d'appareils ;
à communiquer, par le boîtier décodeur (210), les informations de consommation d'énergie à un serveur distant afin de facturer les informations de consommation d'énergie à un intervalle préprogrammé, dans lequel les informations de consommation d'énergie facturées sont reçues par le dispositif de passerelle à partir du serveur distant ;
à valider, par le boîtier décodeur (210), les informations de consommation d'énergie facturées ;
à analyser, par le boîtier décodeur (210), les informations de consommation d'énergie facturées validées, dans lequel le boîtier décodeur fournit une analyse de données avancée à l'aide d'un moteur de règles d'analyse de passerelle d'informations sur l'énergie domestique permettant d'analyser les informations de consommation d'énergie pour chacun de la pluralité d'appareils et des données de consommation d'énergie globale, et dans lequel le boîtier décodeur (210) comprend un processeur de signal numérique dédié embarqué permettant d'effectuer l'analyse de données avancée ;
à afficher les informations de consommation d'énergie analysées, sur un écran d'un téléviseur (212), dans lequel le téléviseur (212) est couplé en communication au boîtier décodeur (210) ;
à permettre de commander la consommation d'énergie de l'au moins un appareil de la pluralité d'appareils :
par un utilisateur à partir du téléviseur (212), ou
en extrayant des conditions météorologiques locales à partir d'un site Web météorologique et en commandant automatiquement l'au moins un appareil de la pluralité d'appareils sur la base des conditions météorologiques locales afin de rendre minimale la consommation d'énergie de l'au moins un appareil de la pluralité d'appareils ; et
à suggérer des options d'économie d'énergie à l'utilisateur en conjuguant les informations de consommation d'énergie avec des données de tarification dynamique de l'énergie, dans lequel l'utilisateur a la possibilité de visualiser le prix de consommation d'énergie à tout moment sur la base des données de tarification dynamique de l'énergie.

2. Procédé selon la revendication 1, comprenant en outre la réception, par le dispositif de passerelle, des informations de consommation d'énergie par l'intermédiaire d'un protocole de communication série, dans lequel le protocole de communication série est sélectionné dans un groupe comprenant le protocole modbus RS485, ZigBee ou Power-line.

3. Procédé selon la revendication 1, dans lequel le budget de consommation d'énergie est établi sur une base journalière, une base hebdomadaire, une base mensuelle ou sur une base de tarification de l'énergie.

4. Procédé selon la revendication 1, comprenant en outre la fourniture de la dernière mise à jour des actualités sur la consommation d'énergie à l'utilisateur sous forme de messages de téléscripteur, d'un flux RSS ou d'événements envoyés par le serveur distant à l'aide du téléviseur (212).

5. Procédé selon la revendication 1, comprenant en outre l'affichage d'un ou plusieurs messages sur le téléviseur (212) reçus à partir du serveur distant, dans lequel les messages sont sélectionnés dans un groupe comprenant une mise à jour d'actualités, une mise à jour de tarification liée à la consommation d'énergie ou un message de dépassement de budget d'appareil.

6. Système pour l'optimisation de consommation d'énergie d'une pluralité d'appareils à l'aide d'une passerelle d'informations sur l'énergie domestique sur un réseau local dédié couplé en communication avec la pluralité d'appareils, dans lequel le système comprend :
un compteur intelligent (208) pour identifier des informations de consommation d'énergie d'au moins un appareil de la pluralité d'appareils à un intervalle prédéfini, dans lequel les informations de consommation d'énergie sont transmises à un boîtier décodeur (210), et dans lequel le boîtier décodeur (210) est un dispositif de passerelle pour la passerelle d'informations sur l'énergie domestique, dans lequel le boîtier décodeur (210) est utilisé comme passerelle d'informations sur l'énergie domestique entre des fournisseurs de services publics ou de services autres que publics par le biais d'un portail Web (216) hébergé par un serveur de services publics ou de services autres que publics, le compteur intelligent (208) et la pluralité d'appareils ;
le boîtier décodeur (210) pour
communiquer les informations de consommation d'énergie à un serveur distant afin de facturer les informations de consommation d'énergie à des intervalles préprogrammés, dans lequel les informations de consommation d'énergie facturées sont reçues par le dispositif de passerelle à partir du serveur distant ;
valider les informations de consommation d'énergie facturées ;
analyser les informations de consommation d'énergie facturées, dans lequel le boîtier décodeur fournit une analyse de données avancée à l'aide d'un moteur de règles d'analyse de passerelle d'informations sur l'énergie domestique permettant d'analyser les informations de consommation d'énergie pour chacun de la pluralité d'appareils et des données de consommation d'énergie globale, et dans lequel le boîtier décodeur (210) comprend un processeur de signal numérique dédié embarqué pour effectuer l'analyse de données avancée ;
afficher les informations de consommation d'énergie analysées sur un écran d'un téléviseur (212), dans lequel le téléviseur (212) est couplé en communication au boîtier décodeur (210) ;
permettre de commander la consommation d'énergie de l'au moins un appareil de la pluralité d'appareils :
par un utilisateur à partir du téléviseur (212), ou
en extrayant des conditions météorologiques locales à partir d'un site Web météorologique et en commandant automatiquement l'au moins un appareil de la pluralité d'appareils sur la base des conditions météorologiques locales afin de rendre minimale la consommation d'énergie de l'au moins un appareil de la pluralité d'appareils ; et
suggérer des options d'économie d'énergie à l'utilisateur en conjuguant les informations de consommation d'énergie avec des données de tarification dynamique de l'énergie, dans lequel l'utilisateur a la possibilité de visualiser le prix de consommation d'énergie à tout moment sur la base des données de tarification dynamique de l'énergie.

7. Système selon la revendication 6, dans lequel l'au moins un appareil de la pluralité d'appareils est sélectionné dans un groupe comprenant un réfrigérateur (202), une machine à laver (204), un conditionneur d'air (206), un téléviseur (212) et un micro-onde.

8. Système selon la revendication 6, dans lequel le boîtier décodeur (210) comprend en outre de multiples ports de bus série universel.

9. Procédé selon la revendication 1, permettant en outre à l'utilisateur d'optimiser la consommation d'énergie sur la base des informations de consommation d'énergie analysées et des données de tarification dynamique de l'énergie.

10. Procédé selon la revendication 1, permettant en outre à un fournisseur d'énergie de prédire des déséquilibres de l'offre et de la demande et de planifier en conséquence le réglage d'un réseau énergétique à l'aide de données collectées par le biais de la passerelle d'informations sur l'énergie domestique.

11. Procédé selon la revendication 1, permettant en outre à l'utilisateur de visualiser et de gérer la consommation d'énergie domestique par la pluralité d'appareils à l'aide d'un Internet (214) en facilitant une communication sécurisée ayant une confidentialité de données avec un fournisseur de services autres que publics.
